# EUROPÄISCHE PATENTSCHRIFT

(11) **EP 4 185 787 B1**
(45) Veröffentlichungstag und Bekanntmachung des Hinweises auf die Patenterteilung: **12.02.2025**
(21) Anmeldenummer: 21735636.9
(22) Anmeldetag: 21.06.2021
(51) Int. Cl.: F16D 65/12, C21D 1/20, C21D 5/00, C21D 1/607, C21D 9/00, C22C 37/00, C21D 1/78

(54) **VERFAHREN ZUM HERSTELLEN VON BREMSSCHEIBEN FÜR KRAFTFAHRZEUGE**
METHOD OF MANUFACTURING BRAKE DISCS FOR MOTOR VEHICLES
PROCÉDÉ DE FABRICATION DE DISQUES DE FREINS POUR VÉHICULES MOTORISÉS

(30) Priorität: 24.07.2020 DE 102020209364
(43) Veröffentlichungstag der Anmeldung: 31.05.2023
(73) Patentinhaber: Robert Bosch GmbH, 70442 Stuttgart (DE)
(72) Erfinder: BECHT, Andreas, 71636 Ludwigsburg (DE); RAAB, Roland, 69168 Wiesloch (DE); LINEK, Karl-Heinz, 71686 Remseck (DE); BOZOVIC, Ilija, 76316 Malsch (DE); ENGLERT, Karl-Otto, 74831 Gundelsheim (DE); LE BARZIC, Laurent, 76139 Karlsruhe (DE)
(86) Internationale Anmeldenummer: PCT/EP2021/066778
(87) Internationale Veröffentlichungsnummer: WO 2022/017704

(56) Entgegenhaltungen:
- US-A- 5 603 784

## Beschreibung

Die vorliegende Erfindung betrifft ein Verfahren zum Herstellen von Bremsscheiben für Kraftfahrzeuge.

Die Bremsscheiben sind bei Kraftfahrzeugen die wesentlichen Bauteile der Bremsanlage. Sie sorgen gemeinsam mit den Bremsbelägen für eine entsprechende Verzögerung des Fahrzeugs, indem die Bewegungsenergie des Autos durch Reibung in Wärmeenergie umgewandelt wird. Die erzeugte Wärme wird dabei zumindest teilweise in der Bremsscheibe gespeichert. In extremen Fällen, wie beispielsweise bei einer Bremsung aus hohen Geschwindigkeiten, kann die Temperatur der Bremsscheibe dadurch sehr hohe Werte erreichen, wodurch die Festigkeit der Bremsscheibe beeinträchtigt werden kann. Üblicherweise werden Bremsscheiben daher aus Grauguss hergestellt, der eine hohe Temperaturbeständigkeit aufweist.

Alternativ ist es bekannt, verschleißfeste Bremsscheiben herzustellen, die beispielsweise als Vollkeramikbremsscheiben ausgebildet werden. Derartige Bremsscheiben sind verhältnismäßig teuer in der Herstellung und somit lediglich in hochpreisigen Fahrzeugen oder auf Wunsch einsetzbar.

Ausgangspunkt für die Herstellung von Bremsscheiben ist eine um verschiedene Zusatzstoffe veredelte Graugussschmelze. Die rund 1.300° Celsius heiße Schmelze wird in speziellen Anlagen zu Bremsscheibenrohlingen gegossen. Anschließend daran werden die Bremsscheibenrohlinge noch bearbeitet und ausgewuchtet.

### Stand der Technik

Die WO 2013/075891 A1 offenbart eine Bremsscheibe für eine Scheibenbremse eines Kraftfahrzeuges. Die Bremsscheibe weist eine Oberflächenbeschichtung auf, mit welcher die Verschleißfestigkeit und Korrosionsbeständigkeit erhöht wird. Die Oberflächenbeschichtung ist dabei an den Reibflächen und an zu den Reibflächen angrenzenden Oberflächen ausgebildet.

Die US 5,603,784 offenbart ein Verfahren zur Herstellung einer drehbaren Bremskomponente aus Gusseisen. Die Bremskomponente wird einer bainitisierenden Wärmebehandlung unterzogen. Dann wird sie einem wiederholten Wärmeprozess unterzogen.

Heutige Bremsscheiben bestehen aus einem lamellarem Eisenguss-Werkstoff. Nach dem Gießen werden die Teile abgekühlt und gedreht. Um die Bremsscheiben vor Korrosion zu schützen werden diese beschichtet. Da die Schutzschicht an der Bremsfläche während des Betriebs abgetragen werden, sollen dadurch insbesondere die Bereiche der Bremsscheibe, die nicht die Bremsflächen darstellen vor Korrosion geschützt werden. Während der Lebensdauer der Bremsscheibe unterliegt diese einem ständigen Verschleiß. Der Abtrag der Korrosionsschutzschicht und der Abtrag aus der Bremsscheibe wird direkt als Feinstaub in die Umwelt bis zum Verschleißminimum emittiert.

Die Aufgabe der vorliegenden Erfindung liegt darin ein Verfahren anzugeben, mit welchem eine Bremsscheibe hergestellt wird, mit welcher die Feinstaubbelastung reduziert und die Lebensdauer verlängert werden kann.

### Offenbarung der Erfindung

Die Aufgabe wird ausgehend von einem Verfahren zum Herstellen von Bremsscheiben für Kraftfahrzeuge gemäß dem Anspruch 1 gelöst. Die nachfolgenden abhängigen Ansprüche geben vorteilhafte Weiterbildungen der Erfindung wieder.

Die Erfindung gibt ein Verfahren zum Herstellen von Bremsscheiben für Kraftfahrzeuge an. Dieses Verfahren umfasst dabei die Schritte des Aufheizens des aus einem lamellarem Eisenguss-Werkstoff bestehenden Bremsscheibenrohlings auf eine Temperatur von 830-870°C, des Haltens dieser Temperatur für 60-120min, des Abschreckens des Bremsscheibenrohlings in einem Salzbad bei einer Temperatur von 210-230°C, des Haltens dieser Temperatur für länger als 90 min, des Aufheizens des Bremsscheibenrohling auf eine Temperatur von 260-300°C und des Haltens dieser Temperatur für länger als 210min.

Durch das erfindungsgemäße Verfahren wird ein bainitisches Werkstoff Gefüge herstellt, welches gegenüber zu Bremsscheiben nach üblichen Herstellungsverfahren eine höhere Härte aufweist. Im Gegensatz zu den bekannten Bremsscheiben ist die Härte dabei nicht lediglich in der Randschicht verbessert, sondern die Bremsscheiben sind durchgehärtet. Die hohe Härte kann somit über die gesamte Lebensdauer der Bremsscheibe aufrecht erhalten werden. Dadurch wird der Verschleiß und damit die Feinstaubemission reduziert und die Lebensdauer verlängert.

Durch die verbesserte Härte und den geringeren Verschleiß kann die Bremsscheibe zudem dünner ausgebildet werden, so dass Gewicht eingespart wird. Für die Herstellung der Bremsscheibe ist ebenso weniger Material notwendig, so dass die Herstellungskosten weiterhin gesenkt werden. Darüber hinaus ergibt sich durch das geringere Gewicht eine Kraftstoffeinsparung bzw. Energieeinsparung über die gesamte Lebensdauer der Bremsscheibe. Auch kann eine solche Bremsscheibe insbesondere in einem heißen Zustand, aufgrund der geringeren Masse, schneller abkühlen. Abgesehen davon hat das bainitische Werkstoff Gefüge zusätzlich den Vorteil, dass die durch das Bremsen verursachte Geräuschentwicklung wesentlich reduziert wird.

Das anschließende Abschrecken in einem Salzbad hat zusätzlich den Effekt, dass aufgrund der hohen Temperaturbeständigkeit des Salzbades, eine Gasblasenbildung an der Oberfläche beim Abschrecken stark reduziert wird. Ein gleichmäßiger Wärmeabfluss über die komplette Oberfläche der Bremsscheibe kann somit an jeder Bremsscheibe in der Wärmebehandlungscharge erfolgen. Dadurch kommt es durch die Wärmebehandlung kaum zu einem Verzug der Bremsscheibe. Der Aufwand für die Nachbearbeitung der Bremsscheibe kann dadurch reduziert beziehungsweise vollständig unterbleiben. Es werden dementsprechend die Kosten für die Herstellung einer solchen Bremsscheibe reduziert. Darüber hinaus wird durch das Salzbad automatisch eine Oxidschicht aus Fe₃O₄ auf der gesamten Bremsscheibe gebildet. Diese Oxidschicht hat die Wirkung eines Korrosionsschutzes, so dass das Aufbringen eines zusätzlichen Korrosionsschutzmittels reduziert werden kann beziehungsweise nicht unbedingt notwendig ist. Dadurch kann ein separater Arbeitsschritt eingespart werden, so dass die Herstellungskosten reduziert werden können.

In einer bevorzugten Ausführung der Erfindung wird das Aufheizen nach dem Abschrecken in einem weiteren Salzbad durchgeführt. Es werden somit für das Verfahren zwei Salzbäder benötigt, welche auf unterschiedlicher Temperatur gehalten werden. Das Aufheizen wird dabei durchgeführt, ohne dass der Bremsscheibenrohling zwischen dem Abschrecken und dem Aufheizen abkühlen kann. Das Aufheizen in einem Salzbad hat den Vorteil, dass das flüssige Salzmedium direkt an dem Bremsscheibenrohling anliegt und darüber eine hohe Wärmeübertragung stattfinden kann. Dadurch wird der Rohling schneller auf die gewünschte Temperatur gebracht. Ebenso ist es dementsprechend schneller und einfacher mögliche, die Temperatur des Salzbades und damit des Rohlings zu regeln.

Durch die Verwendung eines weiteren Salzbades wird dieses nicht durch die noch an dem Bremsscheibenrohling anhaftenden Tropfen des ersten Salzbades verunreinigt. Dadurch kann der Bremsscheibenrohling direkt in das weitere Salzbad eingebracht werden.

Alternativ wird das Aufheizen nach dem Abschrecken in einem Halteofen durchgeführt. Nach dem Abschrecken in dem Salzbad werden die Bremsscheiben somit direkt in den Halteofen verbracht. Der Halteofen hat dabei den Vorteil, dass die Bremsscheibenrohlinge in dem Halteofen direkt getrocknet werden. Zusätzlich ist der Halteofen in Form einer Fertigungstrasse ausbildbar, welchen die Bremsscheibenrohlinge, beispielsweise auf einem Fließband, während der Haltezeit durchqueren. Dadurch kann der Halteofen kostengünstig in einer Serienproduktion integriert sein. Dies ermöglicht eine wirtschaftliche Produktion der Bremsscheiben.

In einer weiteren Alternative wird das Aufheizen nach dem Abschrecken induktiv durchgeführt. Durch ein solches Aufheizen wird kein zusätzlicher Halteofen benötigt. Das Bauteil wird hingegen durch Induktionsspulen selber erhitzt. Das induktive Aufheizen kann dabei im Rahmen einer Fertigungsstraße ausgebildet sein. Auch dies ermöglicht eine wirtschaftliche Serienproduktion der Bremsscheiben.

Vorzugsweise wird der Bremsscheibenrohling in einem weiteren Schritt galvanisch beschichtet. Dabei wird beispielsweise Nickel auf die Oberfläche der Bremsscheibe aufgebracht. Durch eine solche Korrosionsschicht wird der bereits durch die Oxidschicht aus Fe₃O₄ ausgebildete Korrosionsschutz zusätzlich verbessert.

In einer vorteilhaften Weiterbildung wird der Bremsscheibenrohling in einem weiteren Schritt an einer Reibfläche bearbeitet, so dass eine plane Oberfläche ausgebildet wird. Obwohl das erfindungsgemäße Verfahren in der Regel zu keinem Verzug führt, können über diesen Bearbeitungsschritt die Planheit und damit die Laufeigenschaften der Bremsscheibe weiter verbessert werden.

Die der Erfindung zugrunde liegende Aufgabe wird zusätzlich durch eine Bremsscheibe für ein Kraftfahrzeug gelöst, welche nach dem erfindungsgemäßen Verfahren hergestellt ist. Diese Bremsscheibe umfasst dabei ein bainitisches Werkstoff-Gefüge und eine auf der Oberfläche der Bremsscheibe angeordnete Oxidschicht aus Fe₃O₄. Eine solche Bremsscheibe weist die zu dem Verfahren genannten Vorteile auf.

Ausführungsbeispiele der Erfindung sind in der Zeichnung dargestellt und in der nachfolgenden Beschreibung näher erläutert. Es zeigt:
- Figur 1: Ausführungsbeispiel des erfindungsgemäßen Verfahrens zur Herstellung von Bremsscheiben für Kraftfahrzeuge, und
- Figur 2: Temperatur-Zeit Diagramm für das erfindungsgemäße Verfahren.

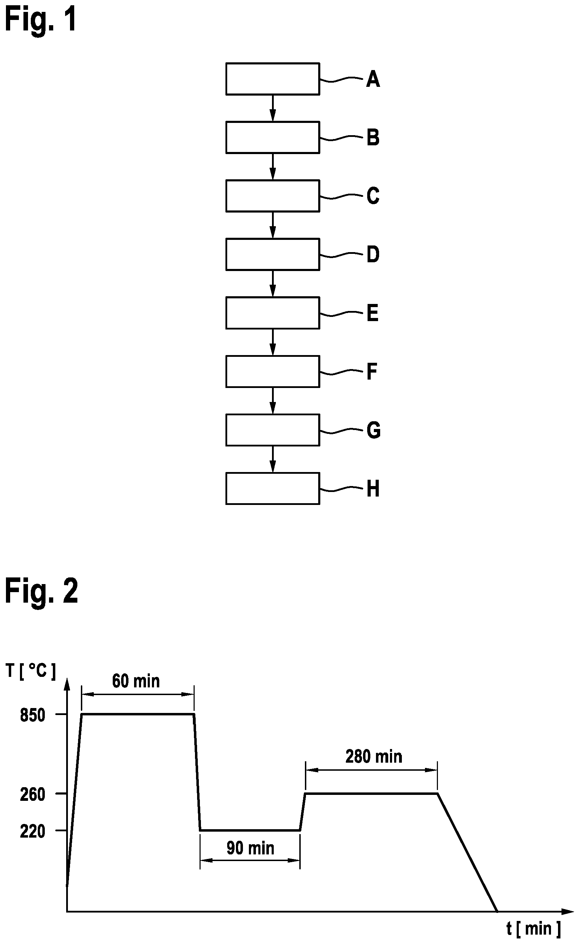

In Figur 1 ist ein Ausführungsbeispiel des erfindungsgemäßen Verfahrens zur Herstellung von Bremsscheiben für Kraftfahrzeuge gezeigt. In einem ersten Schritt A wird ein in einem Ofen eingebrachter Bremsscheibenrohling auf eine Temperatur von 850°C aufgeheizt. Dieser Verfahrensschritt ist ebenso in dem Temperatur-Zeit Diagramm in Figur 2 gezeigt. In einem anschließenden zweiten Schritt B wird der Rohling auf dieser Temperatur für 60 Minuten konstant gehalten.

In einem darauf folgenden dritten Schritt C wird der Bremsscheibenrohling direkt, ohne abzukühlen, von dem Ofen in ein Salzbad gebracht und darin bei einer Temperatur von 220°C abgeschreckt. In diesem Salzbad wird der Bremsscheibenrohling für 90 Minuten belassen. In dieser Zeit wird zusätzlich zu dem Ausbilden eines bainitischen Werkstoff Gefüges eine Korrosionsschutzschicht aus Fe₃O₄ auf der Oberfläche ausgebildet.

Anschließend daran, in einem fünften Schritt E, wird der Bremsscheibenrohling in einen Halteofen gegeben, der einen Temperatur von 260°C aufweist. Wie Figur 2 zeigt wird diese Temperatur für eine Zeit von 280 Minuten gehalten. Anschließend daran wird der Bremsscheibenrohling aus dem Halteofen entnommen, so dass dieser abkühlen kann. Nachdem der Bremsscheibenrohling abgekühlt ist, wird dieser in einem weiteren Schritt G an der Reibfläche bearbeitet, so dass eine plane Oberfläche ausgebildet wird.

In einem darauf folgenden und letzten Verfahrensschritt H wird der Bremsscheibenrohling noch galvanisch beschichtet, so dass zusätzlich zu der bereits ausgebildeten Korrosionsschutzschicht, der Korrosionsschutz nochmals verbessert wird. Zusätzlich wird dabei die bereits bearbeitete Reibfläche beschichtet, so dass diese bis zur Verwendung der Bremsscheibe keinen Rotrost ansetzt.

## Patentansprüche

1. Verfahren zum Herstellen von Bremsscheiben für Kraftfahrzeugen, wobei das Verfahren die Schritte umfasst:
- Aufheizen (A) des aus einem lamellarem Eisenguss-Werkstoff bestehenden Bremsscheibenrohlings auf eine Temperatur von 830-870°C,
- Halten (B) dieser Temperatur für 60-120min,
- Abschrecken (C) des Bremsscheibenrohlings in einem Salzbad bei einer Temperatur von 210-230°C,
- Halten (D) dieser Temperatur für länger als 90 min,
**gekennzeichnet durch**
- Aufheizen (E) des Bremsscheibenrohling auf eine Temperatur von 260-300°C, und
- Halten (F) dieser Temperatur für länger als 210min.

2. Verfahren nach Anspruch 1, **dadurch gekennzeichnet, dass** das Aufheizen (E) nach dem Abschrecken in einem weiteren Salzbad durchgeführt wird.

3. Verfahren nach Anspruch 1, **dadurch gekennzeichnet, dass** das Aufheizen (E) nach dem Abschrecken in einem Halteofen durchgeführt wird.

4. Verfahren nach Anspruch 1, **dadurch gekennzeichnet, dass** das Aufheizen (E) nach dem Abschrecken induktiv durchgeführt wird.

5. Verfahren nach einem der vorherigen Ansprüche, **dadurch gekennzeichnet, dass** der Bremsscheibenrohling in einem weiteren Schritt (H) galvanisch beschichtet wird.

6. Verfahren nach einem der vorherigen Ansprüche, **dadurch gekennzeichnet, dass** der Bremsscheibenrohling in einem weiteren Schritt (G) an einer Reibfläche bearbeitet wird, so dass eine plane Oberfläche ausgebildet wird.

## Claims

1. Method for producing brake discs for motor vehicles, wherein the method comprises the steps:
- heating (A) the brake disc blank, consisting of a lamellar cast-iron material, to a temperature of 830-870°C,
- holding (B) this temperature for 60-120 min,
- quenching (C) the brake disc blank in a salt bath at a temperature of 210-230°C,
- holding (D) this temperature for longer than 90 min,
**characterized by**
- heating (E) the brake disc blank to a temperature of 260-300°C, and
- holding (F) this temperature for longer than 210 min.

2. Method according to Claim 1, **characterized in that** the heating (E) after the quenching is carried out in a further salt bath.

3. Method according to Claim 1, **characterized in that** the heating (E) after the quenching is carried out in a holding furnace.

4. Method according to Claim 1, **characterized in that** the heating (E) after the quenching is carried out inductively.

5. Method according to one of the preceding claims, **characterized in that** the brake disc blank is electroplated in a further step (H).

6. Method according to one of the preceding claims, **characterized in that** the brake disc blank is processed in a further step (G) on a friction surface, such that a planar surface is formed.

## Revendications

1. Procédé de fabrication de disques de frein pour véhicules automobiles, le procédé comprenant les étapes suivantes :
- chauffage (A) de l'ébauche de disque de frein constituée d'un matériau de fonte lamellaire à une température de 830 à 870°C,
- maintien (B) de cette température pendant 60 à 120 min,
- trempe (C) de l'ébauche de disque de frein dans un bain de sel à une température de 210 à 230°C,
- maintien (D) de cette température pendant plus de 90 min,
**caractérisé par**
- le chauffage (E) de l'ébauche de disque de frein à une température de 260 à 300°C, et
- le maintien (F) de cette température pendant plus de 210 min.

2. Procédé selon la revendication 1, **caractérisé en ce que** le chauffage (E) est, après la trempe, effectué dans un autre bain de sel.

3. Procédé selon la revendication 1, **caractérisé en ce que** le chauffage (E) est, après la trempe, effectué dans un four de maintien.

4. Procédé selon la revendication 1, **caractérisé en ce que** le chauffage (E) est, après la trempe, effectué par induction.

5. Procédé selon l'une des revendications précédentes, **caractérisé en ce que** l'ébauche de disque de frein est revêtue par électrolyse dans une étape supplémentaire (H).

6. Procédé selon l'une des revendications précédentes, **caractérisé en ce que**, dans une étape supplémentaire (G), l'ébauche de disque de frein est usinée sur une surface de friction de manière à former une surface plane.
